(19) Europäisches Patentamt
European Patent Office
Office européen des brevets

(11) EP 3 864 102 B1

(12) # EUROPEAN PATENT SPECIFICATION

(45) Date of publication and mention of the grant of the patent:
**27.11.2024 Bulletin 2024/48**

(21) Application number: **19789755.6**

(22) Date of filing: **08.10.2019**

(51) International Patent Classification (IPC):
***C09J 7/38*** *(2018.01)* ***C09J 153/02*** *(2006.01)*
***B32B 27/06*** *(2006.01)*

(52) Cooperative Patent Classification (CPC):
(C-Sets available)
**C09J 153/02; C09J 7/387** (Cont.)

(86) International application number:
**PCT/IB2019/058556**

(87) International publication number:
**WO 2020/075066 (16.04.2020 Gazette 2020/16)**

(54) **ADHESIVE COMPOSITION COMPRISING BLOCK COPOLYMER WITH POLYVINYL AROMATIC ENDBLOCK AND POLY(VINYL AROMATIC/BUTADIENE) COPOLYMER BLOCK AND SIS BLOCK COPOLYMER, ARTICLES, AND METHODS**

KLEBSTOFFZUSAMMENSETZUNG MIT EINEM BLOCKCOPOLYMER MIT POLYVINYLAROMATISCHEM ENDBLOCK UND POLY(VINYLAROMATISCHEM/ BUTADIEN)-COPOLYMERBLOCK UND SIS-BLOCKCOPOLYMER, ARTIKEL UND VERFAHREN

COMPOSITION ADHÉSIVE COMPRENANT UN COPOLYMÈRE SÉQUENCÉ AVEC UN BLOC D'EXTRÉMITÉ AROMATIQUE POLYVINYLIQUE ET UN BLOC COPOLYMÈRE POLY(VINYLE AROMATIQUE/BUTADIÈNE) ET UN COPOLYMÈRE SÉQUENCÉ SIS, ARTICLES ET PROCÉDÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2018 US 201862744330 P**

(43) Date of publication of application:
**18.08.2021 Bulletin 2021/33**

(73) Proprietor: **3M Innovative Properties Company**
**Saint Paul, Minnesota 55133-3427 (US)**

(72) Inventors:
- **FORNEY, Bradley S.**
  **Saint Paul, Minnesota 55133-3427 (US)**
- **BOLTON, Justin M.**
  **Saint Paul, Minnesota 55133-3427 (US)**
- **JANOSKI, Jonathan E.**
  **Saint Paul, Minnesota 55133-3427 (US)**
- **YOO, Taewook**
  **Saint Paul, Minnesota 55133-3427 (US)**

(74) Representative: **Mathys & Squire**
**Theatinerstraße 7**
**80333 München (DE)**

(56) References cited:
**WO-A1-00/17285** **WO-A1-91/13935**
**US-A- 5 290 842** **US-B1- 6 277 488**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 153/02, C08L 53/02, C08K 5/01**

## Description

### Summary

In one embodiment, a pressure sensitive adhesive composition is described comprising A first block copolymer comprising polyvinyl aromatic end block and poly(vinyl aromatic/butadiene) copolymer block; at least 20 wt.% of a second polystyrene-polyisoprene-polystyrene block copolymer; and solid tackifying resin. In favored embodiments, the total amount of block copolymer ranges from 40-65 wt.% and plasticizing oil and liquid tackifying resin are present in a total amount of less than 20 wt.-% based on the total weight of organic components of the pressure sensitive adhesive composition.

In another embodiment, an adhesive article is described comprising a substrate having two major surfaces; wherein at least one major surface comprises a layer of pressure sensitive adhesive composition, as described herein.

Also described herein is an adhesive article is described comprising a substrate comprising two major surfaces and a thickness in a direction orthogonal to the major surfaces; and a layer of pressure sensitive adhesive disposed on a major surface. The pressure sensitive adhesive compositions comprises a first block copolymer comprising polyvinyl aromatic end block and poly(vinyl aromatic/butadiene) copolymer block; a second polystyrene-polyisoprene-polystyrene block copolymer; and solid tackifying resin. The pressure sensitive adhesive exhibits a shear adhesion to a painted drywall greater than 5,000 minutes according to ASTM D3654 (2011) using a bonded area of 2.54 cm by 1.27 cm.

In some embodiments, the adhesive article may be described as "stretch-releasable". In this embodiment, the substrate has an elongation at break of greater than 50% in at least one direction.

Also described herein is a method of use of an adhesive or adhesive article comprising providing a pressure sensitive adhesive composition or adhesive article as described herein; and bonding the pressure sensitive adhesive composition to a painted surface.

WO91/13935 A1 discloses a pressure-sensitive adhesive of a first elastomer (styrene-butadiene block copolymer) and a second elastomer (styrene-isoprene-styrene block copolymer) . The composition is tackified by a tackifying system comprising tackifier preferentially miscible with the second elastomer.

US 5 290 842 A discloses pressure-sensitive adhesives of a first elastomer (styrene-butadiene block copolymer) and a second elastomer (styrene-isoprene-styrene block copolymer). As tackifier system is employed a tackifier preferentially miscible with the second elastomer.

### Brief Description of the Drawings

FIG. 1 is a rheology curve for embodied pressure sensitive adhesive compositions.

### Detailed Description

Presently described are adhesive compositions. The adhesive composition comprise a block copolymer comprising polyvinyl aromatic end block and poly(vinyl aromatic/butadiene) copolymer block; a polystyrene-polyisoprene-polystyrene block copolymer; and solid tackifying resin.

The block copolymer comprising a polyvinyl aromatic end block and poly(vinyl aromatic/butadiene) copolymer block typically has the general structure:

A-A/B

or

A-A/B-B

wherein

A is a polyvinyl aromatic block;
B is polybutadiene block; and
A/B is a poly(vinyl aromatic/butadiene) copolymer block.

For simplicity, the block copolymer will be subsequently referred to as the A-A/B block copolymer. Such terminology is intended to include both structures described above unless specified otherwise.

The poly(vinyl aromatic/butadiene) copolymer block (A/B) may be characterized as a random copolymer. The poly(vinyl aromatic/butadiene) copolymer block (A/B) may also be characterized as tapered, meaning that the block contains a greater number of polymerized vinyl aromatic groups at one end (bonded to the polyvinyl aromatic block) and a

greater number of polymerized butadiene groups at the opposing end (bonded to the butadiene block).

The polyvinyl aromatic block, A, may be any polyvinyl aromatic block known for block copolymers. The polyvinyl aromatic block is typically derived from the polymerization of vinyl aromatic monomers having 8 to 12 carbon atoms such as styrene, o-methylstyrene, p-methylstyrene, alpha-methylstyrene, p-tert-butylstyrene, 2,4-dimethylstyrene vinylnaphthalene, vinyltoluene, vinylxylene, vinylpyridine, ethylstyrene, t-butylstyrene, isopropylstyrene, dimethylstyrene, other alkylated styrenes, and mixtures thereof. Most typically, the polyvinyl aromatic block is derived from the polymerization of substantially pure styrene monomer or styrene monomer as a major component with minor concentrations of other vinyl aromatic monomers, as described above. The amount of other vinyl aromatic monomer(s) is typically no greater than 10, 9, 8, 7, 6, 5, 4, 3, 2, 1, or 0.5 % by weight of the total amount of polymerized vinyl aromatic monomer.

The B block is typically derived from the polymerization of substantially pure butadiene monomer or butadiene monomer as a major component with minor proportions of isoprene and/or other conjugated diene monomers having 4 to 12 carbon atoms, such as ethyl butadiene; 2,3-dimethyl-1,3-butadiene; phenylbutadiene; 1,3-pentadiene; 1,3-hexadiene, ethyl hexadiene. The amount of other conjugated diene monomer(s) is typically no greater than 10, 9, 8, 7, 6, 5, 4, 3, 2, 1, or 0.5 % by weight of the total amount of polymerized conjugated diene. The conjugated diene is typically unsaturated, such as in the case of butadiene.

Block copolymers comprising a polyvinyl aromatic end block and poly(vinyl aromatic/butadiene) block are commercially available, such as from Dynasol under the trade designation "SOLPRENE™".

The content of polymerized units of vinyl aromatic monomer(s), such as styrene, typically ranges from 10 to 50 wt.% based on the total weight of the A-A/B block copolymer. Thus, the content of polymerized units of vinyl aromatic monomer(s) includes the polymerized units of the polyvinyl aromatic end block (A) as well as the polymerized vinyl aromatic monomer(s) of the poly(vinyl aromatic/butadiene) copolymer block (A/B). In some embodiments, the A-A/B block copolymer has a polymerized vinyl aromatic monomer (e.g. styrene) content of at least 15 or 20 wt.% based on the total weight of the A-A/B block copolymer. In some embodiments, the A-A/B block copolymer has a polymerized vinyl aromatic monomer (e.g. styrene) content of no greater than 45, 40, 35 or 30 wt.% based on the total weight of the A-A/B block copolymer.

The concentration of polymerized vinyl aromatic monomer(s), such as styrene, of the (e.g. tapered) poly(vinyl aromatic/butadiene) copolymer block (A/B) is typically at least 1, 2, 3, 4, 5, 6, 7, 8, 9, or 10 wt.%. In some embodiments, the concentration of polymerized vinyl aromatic monomer(s), such as styrene, of the poly(vinyl aromatic/butadiene) copolymer block (A/B) is no greater than 30, 29, 28, 27, 26, 25, 24, 23, 22, 21, or 20 wt.%. In some embodiments, the concentration of polymerized vinyl aromatic monomer(s), such as styrene, of the poly(vinyl aromatic/butadiene) copolymer block (A/B) is no greater than 19, 18, 17, 16, or 15 wt.%. In some embodiments, the concentration of polymerized vinyl aromatic monomer(s), such as styrene, of the poly(vinyl aromatic/butadiene) copolymer block (A/B) is no greater than 14, 13, 12, 11, or 10 wt.%. Thus, the poly(vinyl aromatic/butadiene) copolymer block (A/B) typically comprises at least 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 wt.% of polymerized conjugated diene (e.g. butadiene).

The number average molecular weight of the A-A/B block copolymer typically ranges from 25,000 to 250,000 g/mole. In some embodiments, the number average molecular weight of the A-A/B block copolymer is at least 30,000; 35,000 or 40,000 g/mole. In some embodiments, the number average molecular weight of the A-A/B block copolymer is no greater than 200,000, 175,000, 150,000, or 100,000 g/mole.

The term "molecular weight" refers to the molecular weight in g/mole of the total block copolymer as can be measured with gel permeation chromatography (GPC) using polystyrene calibration standards, according to the test method described in the examples using light scattering detection.

The polydispersity of the A-A/B block copolymer ranges from 1 to 1.5. In some embodiments, the polydispersity is no greater than 1.40, 1.35, 1.30, 1.25, 1.20, 1.15, 1.10, or 1.05.

The A-A/B block copolymer described herein can be characterized as a linear block copolymer.

In contrast, preparation of radial (branched) polymers requires a post-polymerization step called "coupling". Therefore, radial (branched) polymers include residues of a variety of coupling agents such as dihalo alkanes, silicon halides, siloxanes, multifunctional epoxides, silica compounds, esters of monohydric alcohols with carboxylic acids, (e.g. dimethyl adipate) and epoxidized oils. Silane coupling agents include tetra-alkoxysilanes such as tetra-ethoxysilane (TEOS) and tetra-methoxysilane, alkyl-trialkoxysilanes such as methyl-trimethoxy silane (MTMS), aliphatic diesters such as dimethyl adipate and diethyl adipate, and diglycidyl aromatic epoxy compounds such as diglycidyl ethers deriving from the reaction of bis-phenol A and epichlorohydrin. As described in the literature star-shaped polymers are prepared with polyalkenyl coupling agents such as divinylbenzene, and typically m-divinylbenzene. The A-A/B block copolymer described herein is substantially free of such coupling agents. However, the adhesive composition contains a second block copolymer that typically comprises such coupling agents.

The polystyrene-polyisoprene-polystyrene (SIS) block copolymer may have various structures including a linear A-B-A triblock block copolymers and (A-B)nX radial (e.g. multi-arm) block copolymer wherein A is a polyvinyl aromatic blocks, B is a conjugated diene block, n is an integer of at least 2 or 3, typically ranging up to 6, 7, 8, 9, 10, 11, or 12 and X is

the residue of a coupling agent. The unsaturated midblock of the second block copolymer can be tapered or non-tapered, but is typically non-tapered. As used herein, the terminology polystyrene-polyisoprene-polystyrene or SIS block copolymer refers to both the linear and radial (e.g. multi-arm) structures unless specified otherwise.

The polyvinyl aromatic blocks can be prepared from the same vinyl aromatic monomers previously described. The one or more conjugated diene blocks can be prepared from any of the conjugated diene monomers typically utilized in the preparation of vinyl aromatic (e.g. styrene) block copolymer, especially isoprene.

In some embodiments, the second polystyrene-polyisoprene-polystyrene block copolymer comprises little or no diblock. Thus, the diblock content is less than 10, 9, 8, 7, 6, 5, 4, 3, 2, or 1 wt.% based on the total weight of the second polystyrene-polyisoprene-polystyrene block copolymer.

In other embodiments, the second SIS block copolymer further comprises appreciable amounts of A-B diblock wherein A is a polyvinyl aromatic block and B is a conjugated diene block. For example, the diblock content may be at least 15, 20, 25, or 30 wt.% of the total second block copolymer. In some embodiments, the diblock content of the second block copolymer is typically no greater than 70, 60, 50, or 40 wt.% of the total second SIS block copolymer.

Various types of styrene-isoprene-styrene (SIS) block copolymers are commercially available, such as under the trade designation KRATON™ D.

In some embodiments, the second SIS block copolymer has a molecular weight in the same range as the A-A/B block copolymer, as previously described.

In other embodiments, the second SIS block copolymer has a higher molecular weight than the A-A/B block copolymer. In some embodiments, the second block copolymer has a number average molecular weight of at least 300,000; 400,000; or 500,000 g/mol. In some embodiments, the second block copolymer has a number average molecular weight of at least 600,000; 700,000; 800,000; 900,000 or 1,000,000 g/mol. In some embodiments, the second block copolymer has a number average molecular weight of at least 1,250,000 or 1,500,000. The molecular weight of the second block copolymer is typically no greater than 1,750,000 or 2,000,000 g/mole.

In some embodiments, the molecular weight of the polyvinyl aromatic (e.g. polystyrene) end blocks of the second SIS block copolymer is about the same and the second block copolymer may be characterized as symmetrical. In other embodiments, the molecular weight of the polyvinyl aromatic (e.g. polystyrene) end blocks is different and the second block copolymer may be characterized as asymmetrical. In some embodiments, the number average molecular weight of the lower molecular weight polyvinyl aromatic (e.g. polystyrene) end block is at least 1,000 to about 10,000 g/mole, typically from about 2,000 to about 9,000 g/mole, more typically between 4,000 and 7,000 g/mole. The number average molecular weight of the higher molecular weight polyvinyl aromatic (e.g. polystyrene) end block is in the range from about 5,000 to about 50,000 g/mole, typically from about 10,000 to about 35,000 g/mole.

In some embodiments, the number of arms of the second block copolymer containing a higher molecular weight end block is at least 5, 10 or 15 percent of the total number of arms of the second block copolymer. In some embodiments, the number of arms containing a higher molecular weight end block is no greater than 70, 65, 60, 55, 50, 45, or 35 percent of the total number of arms of the second block copolymer.

The asymmetrical second block copolymer typically comprises from about 4 to 40 percent by weight of a polyvinyl aromatic monomer (e.g. polystyrene), and from about 96 to 60 percent by weight of a polymerized conjugated diene(s). In some embodiments, the asymmetrical second block copolymer comprises from about 5 to 25 percent of a polymerized vinyl aromatic monomer (e.g. styrene) and from about 95 to 75 percent of a polymerized conjugated diene, and more typically from about 6 to 15 percent of a polymerized vinyl aromatic monomer and from about 94 to 85 percent of polymerized conjugated diene.

The weight ratio of second polystyrene-polyisoprene-polystyrene block copolymer to A-A/B block copolymer can vary. In some embodiments, the amount by weight of the second block copolymer is equal to or greater than the amount of A-A/B block copolymer. In some embodiments, the weight ratio of second SIS block copolymer to A-A/B block copolymer ranges from 1:1 to 20:1. In some embodiments, the weight ratio of second block copolymer to A-A/B block copolymer is at least 1.1:1; 1.2:1; 1.3:1; 1.4:1; or 1.5:1 (or in other words 3:2). In some embodiments, the weight ratio of second block copolymer to A-A/B block copolymer is no greater than 15:1, 10:1, 5:1, 4:1, 3:1, or 2:1.

When the SIS block copolymer lacks diblock the weight ratios just described are also weight ratios of SIS triblock to A-A/B block copolymer. When the SIS block copolymer comprises diblock, it is surmised that the preferred amount of triblock remains the same and the amount of A-A/B block copolymer may be reduced by the amount of polystyrene-polyisoprene diblock. Thus, the weight ratio of second SIS block copolymer to the sum of A-A/B block copolymer and polystyrene-polyisoprene diblock ranges from 1:1 to 20:1. Further, the weight ratio of second block copolymer to the sum of A-A/B block copolymer polystyrene-polyisoprene diblock is at least 1.1:1; 1.2:1; 1.3:1; 1.4:1; or 1.5:1 (or in other words 3:2). In some embodiments, the weight ratio of second block copolymer to the sum of A-A/B block copolymer and polystyrene-polyisoprene diblock is no greater than 15:1, 10:1, 5:1, 4:1, 3:1, or 2:1.

The adhesive comprises at least one (e.g. first) polyvinyl aromatic end block and poly(vinyl aromatic/butadiene) block copolymer (A-A/B), and at least one (e.g. second) polystyrene-polyisoprene-polystyrene block copolymer. The total amount of block copolymer is at least 20, 25, 30, 35, 40, 45, 50, or 60 wt.% based on the total amount or organic

components of the adhesive composition (e.g. excluding inorganic filler). In some embodiment, the total amount of block copolymer is no greater than 80, 75, 70, or 65 wt.%.

The adhesive composition comprises at least 20 wt.% of polystyrene-polyisoprene-polystyrene block copolymer or in other words SIS and/or (SI)n block copolymer as previously described that is not polystyrene-polyisoprene (S-I) diblock.

The total amount of block copolymer and the amount of polystyrene-polyisoprene-polystyrene block copolymer are of importance for obtaining the desired shear properties.

In some embodiments, the polystyrene-polyisoprene-polystyrene block copolymer(s) are selected for use in the adhesive composition are those that have little or no polystyrene-polyisoprene (S-I) diblock. In other embodiments, the polystyrene-polyisoprene-polystyrene block copolymer(s) that are selected for use in the adhesive composition are those further comprising polystyrene-polyisoprene (S-I) diblock, as previously described. Thus, the total amount of block copolymer can include polystyrene-polyisoprene (S-I) diblock.

The adhesive composition described herein, further comprises at least one tackifying resin.

Tackifying resins include both A block compatible resins and B block compatible resins. The A block compatible resin may be selected from coumarone-indene resin, rosin ester resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether) or mixture of two or more of these.

Although the composition of the present invention can have a combination of resins compatible with A blocks and/or B blocks, in some favored embodiments, the adhesive composition comprises solely or predominantly midblock tackifying resin. In this embodiment, the amount of tackifying resin compatible with the A block is no greater than 10, 9, 8, 7, 6, 5, 4, 3, 2, or 1 wt.% based on the total weight of the organic components of the adhesive composition.

Resins compatible with the B block maybe selected compatible C5 hydrocarbon resins, hydrogenated C5 hydrocarbon resins, styrenated C5 resins, C5/C9 resins, styrenated terpene phenolic resins, fully hydrogenated or partially hydrogenated C9 hydrocarbon resins, rosin esters, rosin derivatives and mixtures thereof. One preferred B block compatible tackifying resin is a C5 tackifying resin sold under the trade name "ZEON QUINTONE K100." Hydrogenated aromatic modified cycloaliphatic hydrocarbon resins such as available under the trade name "ESCOREZ" 1300 or 5000 series are typically not preferred for use as the sole tackifying resin for obtaining high shears to painted drywall. However, it is surmised that such tackifying resin can be used in combination with favored tackifying resins, such as C5 hydrocarbon resins and especially terpene phenolic resins.

The tackifying resin compatible with the B block is typically a solid, having a softening point of at least 60°C, 65°C, 70°C, 75°C, 80°C, 85°C. Tackifying resins having a softening point of at least 90°C 100°C are typically preferred for obtaining high shears to painted drywall. The tackifying resin can have a softening point ranging up to 145°C or 150°C. In some embodiments, the tackifying resin has a softening point of no greater than 145, 140, 135, 130, 125, or 120°C.

The adhesive composition may comprise a liquid tackifying resins having a softening point less than 25°C. In some embodiments, the adhesive composition comprises a liquid tackifying resin, having a softening point less than 20, or 15°C, such as in the case of "WINGTACK 10", having a softening point of 10°C. When the adhesive comprises a liquid tackifying resins or solid tackifying resin having a softening point less than 90°C, it is preferred that such lower softening point tackifying resin(s) are used in combination with a solid tackifying resin having a sufficiently high softening point, such as a softening point of at least 100, 105, or 110°C.

In various embodiments, the adhesive compositions comprise a polar tackifier, wherein the polar tackifier includes a phenolic moiety and is characterized by a hydroxyl number.

The terpene phenolic tackifiers can have a hydroxyl number between about 0 (such as for a nearly pure Compound A aromatic ether type reaction product shown above) and 220. In some embodiments, the terpene phenolic tackifiers have a hydroxyl number of at least 10, 20, or 25. In some embodiments, the terpene phenolic tackifiers have a hydroxyl number no greater than 175, 150, 125, 100, or 75. The hydroxyl number is defined as the number of mg KOH corresponding to the hydroxyl functionality in a 1 g aliquot of the tackifier compound. Various methods are employed by the skilled practitioner to determine hydroxyl number. The most frequently described method is conversion of the sample with acetic acid anhydride in pyridine with subsequent titration of the released acetic acid (also described in ASTM D1957-86(2001) Standard Test Method for Hydroxyl Value of Fatty Oils and Acids (Withdrawn 2007)). Also widely employed is the method according to ASTM E 1899, wherein primary and secondary hydroxyl groups are converted with toluene-4-sulfonyl-isocyanate (TSI) into an acid carbamate, which is then titrated with tetrabutylammonium hydroxide (TBAH) in a non-aqueous medium.

The phenolic moiety is an aromatic moiety having at least one hydroxyl group covalently bonded directly thereto; the simplest phenolic moiety is derived from the compound phenol (hydroxybenzene). In some embodiments, the phenolic moiety includes two or more aromatic rings bonded or fused together, either directly or through a linking group. In some embodiments the phenolic moiety has two or more hydroxyl groups bonded thereto. In some embodiments one or more additional substituents, such as alkyl groups, are present on the phenolic moiety. Blends of phenolic compounds are also suitably employed in the reactions leading to the terpene phenolic tackifiers useful in the pressure sensitive adhesives

described herein.

Phenolic compounds include polyhydroxylated benzenes. Useful polyhydroxylated benzene compounds include dihydroxybenzenes and trihydroxybenzenes. Dihydroxybenzene compounds useful in reactions herein can include, in embodiments, hydroquinone (1,4-dihydroxybenzene), catechol (1,2-dihydroxybenzene), and resorcinol (1,3-dihydroxybenzene). Trihydroxybenzene compounds useful in reactions herein can include, in embodiments, phloroglucinol (1,3,5-trihydroxybenzene), hydroxyhydroquinone (1,2,4-trihydroxybenzene), and pyrogallol (1,2,3-benzenetriol). In some embodiments, polyhydroxylated adducts of naphthalene are useful in the reactions herein; examples of such compounds include, in embodiments, 1,2-dihydroxynaphthalene, 1,3-dihydroxynaphthalene, 1,6-dihydroxynaphthalene, 2,3-dihydroxynaphthalene, 2,7-dihydroxynaphthalene, and the like.

In some embodiments, hydroxylated and polyhydroxylated anthracene, phenanthrene, azulene, and the like are suitably employed in the reactions that form one or more terpene phenolics useful as tackifiers in the pressure sensitive adhesives herein. Bisphenols, such as bisphenol A and other compounds having non-fused multiple aromatic rings bonded via a linking group are also useful; it is not necessary for each aromatic ring to have a hydroxyl group as long as at least one aromatic ring has at least one hydroxyl group present bonded directly thereto.

Additionally, dimers, trimers, and oligomers of phenolic compounds and blends thereof are suitably employed in the reactions that form one or more terpene phenolics useful as tackifiers in the pressure sensitive adhesives herein. Such compounds include, for example, dimerized or oligomerized phenolic compounds formed via condensation with an aldehyde to result in methylene or methylol ether linking groups. Such compounds are widely used in the industry as precursors or prepolymers for phenol-formaldehyde resins. In some embodiments, both novalac and resole type precursors can be useful; however, in some such embodiments novalac precursors are preferred. In some embodiments the phenolic compound, or a blend of phenolic compounds, are pre-condensed or oligomerized. In somewhat more detail, a phenolic compound, or a combination of two or more phenolic compounds are combined with an amount of an aldehyde that is selected to provide the desired level of oligomerization, and an acidic or basic catalyst employed under conditions of mild heat, for example between 50° C and 100° C, to obtain the condensation products thereof. The oligomers thus formed have multiple reaction sites that are useful in subsequent steps in the formation of the tackifiers useful in the adhesive compositions herein, as will be readily recognized by one of skill. In some embodiments, suitable phenolic oligomers include naturally occurring oligomeric structures, such as tannic acid, humic acid, fulvic acid, and Quebracho extracts.

In some embodiments one or more additional substituents are present on one or more rings of the phenolic compounds. For example, one or more alkyl, ether, halogen, amino, amido, imino, carbonyl, or other substituents, or a combination of two or more thereof, may be present as substituents bonded to the aromatic ring(s) of the phenolic compounds, or present as a substituent on an alkyl or alkenyl group bonded to the aromatic ring(s) of the phenolic compounds. In many embodiments, however, the one or more additional substituents substantially exclude or completely exclude acidic or potentially acidic moieties. In some embodiments, tackifiers used in the pressure sensitive adhesives are characterized by an acid number of less than about 0.5. In some embodiments, tackifiers used in the pressure sensitive adhesives herein are characterized by an acid number of less than about 0.4. In some embodiments, tackifiers used in the pressure sensitive adhesives are characterized by an acid number of less than about 0.3. In some embodiments, tackifiers used in the pressure sensitive adhesives are characterized by an acid number of less than about 0.25. In some embodiments, tackifiers used in the pressure sensitive adhesives are characterized by an acid number of less than about 0.2. In some embodiments, tackifiers used in the pressure sensitive adhesives are characterized by an acid number of less than about 0.1. In some embodiments, tackifiers used in the pressure sensitive adhesives herein are characterized by an acid number of about 0.

In some embodiments, carboxylate, sulfonate, phosphonate, and other groups are excluded from the group of additional substituents that may be present in any moiety bonded to the tackifiers useful in the pressure sensitive adhesives herein. Examples of suitable phenolic compounds having one or more additional substituents present thereon include various isomers of hydroxytoluene, orcinol (3,5-dihydroxytoluene) and 2,5-dimethyl resorcinol.

In some embodiments, phenolic compounds having more than one hydroxyl group, more than one aromatic group, and one or more additional substituents are suitably employed in the reactions that form one or more tackifiers that are useful in the pressure sensitive adhesives herein. Some examples of such compounds include 4,4'-((1E)-1-penten-4-yne-1,5-diyl)biscatechol, quercetin (2-(3,4-dihydroxyphenyl)-3,5,7-trihydroxychromen-4-one), myricetin (3,5,7-trihydroxy-2-(3,4,5-trihydroxyphenyl)chromen-4-one), theaflavin (1,8-bis(3-alpha,5,7-trihydroxy-2-alpha-chromanyl)-5H-benzocyclohepten-5-one) and gossypol (7-(8-formyl-1,6,7-trihydroxy-3-methyl-5-propan-2-ylnaphthalen-2-yl)-2,3,8-trihydroxy-6-methyl-4-propan-2-ylnaphthalene-1-carbaldehyde).

Blends of two or more of any of the phenolic compounds described herein are useful in various embodiments to form the tackifiers useful in the pressure sensitive adhesive compositions herein. The use of any of the above alone or in combination is not particularly limited; rather, the selection and use thereof is suitably adjusted to result in the desired end product useful in one or more adhesive compositions described herein or others that will be envisioned by one of skill.

The phenolic compounds as described above can be reacted with alkenyl compounds having at least 10 carbons, and no acidic moieties, to form the polar tackifiers useful in the adhesive compositions herein. The alkenyl compounds can

be linear, branched, cyclic, or a combination thereof, and contain one or more unsaturated moieties that are reactive with a phenolic compound when catalyzed by an acid. One class of such alkenyl compounds is the terpenes. Terpenes are a class of hydrocarbons occurring widely in plants and animals, although synthetic versions are both available and useful herein. Empirically the terpenes are dimers, trimers, and higher oligomers of isoprene, or 2-methyl-1,3-butadiene. Isoprene has the formula $CH_2=C(CH_3)-CH=CH_2$, or $(C_5H_8)$; terpene compounds have the formula $(C_5H_8)_n$ where n is 2 or more. Terpenes can include one or more cyclic moieties. Terpenes are generally referred to in accordance with the number of isoprene units in the molecule: monoterpenes ($C_{10}H_{16}$) contain two isoprene units; sesquiterpenes ($C_{15}H_{24}$), three; diterpenes ($C_{20}H_{32}$), four; triterpenes ($C_{30}H_{48}$), six; and tetraterpenes ($C_{40}H_{64}$), eight. Monoterpenes, sesquiterpenes, and diterpenes are abundant in the essential oils of plants. Monoterpenes include α-pinene, its isomers β-pinene and γ-pinene, linalool, myrcene, limonene, carene, and camphene. Turpentine contains several monoterpenes. Sesquiterpenes include caryophyllene, zingiberene, humulene, cadinene, longifolene, cedr-8-ene, and farnesene. Diterpenes include ferruginol, cafestol, cembrene, sclarene, steviol, and taxadiene. Vitamin A is a diterpene derivative, as are the rosin acids. The triterpene squalene, obtainable from shark-liver oil, may be converted to cholesterol and many other steroids. The carotenes (α, β, γ, δ, ε, and ζ isomers, among others) are the best known tetraterpenes.

Terpene compounds are reacted with phenolic compounds to result in terpene phenolic tackifiers useful in the adhesive compositions herein. For the purposes of this disclosure, terpene phenolic tackifiers, or terpene phenolics, have at least one aromatic group bearing at least one hydroxyl group bound directly to the aromatic group; and at least one branched alkyl or alkenyl group bonded directly to an aromatic group. In some embodiments, the branched alkyl or alkenyl group is derived from an oligomer of isoprene. In some embodiments, the terpene phenolic has a single aromatic group having one or more hydroxyl groups and one or more branched alkyl or alkenyl group bonded directly thereto. In other embodiments, the terpene phenolic has more than one aromatic group having one or more hydroxyl groups and one or more branched alkyl or alkenyl group bonded directly to one or more aromatic groups.

Conventional methods are employed to make the terpene phenolic tackifiers useful in the adhesive compositions herein. Some representative methods that are useful to form terpene phenolic tackifiers include those described in US Patent Nos. 3,347,935; 3,692,844; 3,976,606; 5,457,175; and 6,160,083; and EP 1504074. In some embodiments, the terpene phenolic tackifiers are 1:1 addition products of phenolic compounds with terpene compounds. In some such embodiments, the reaction is catalyzed by acidic or acid-forming catalysts. Using limonene and phenol as exemplary reagents for illustrative purposes only, the reaction proceeds via path a or path b below, typically resulting in a mixture of products A, B, C:

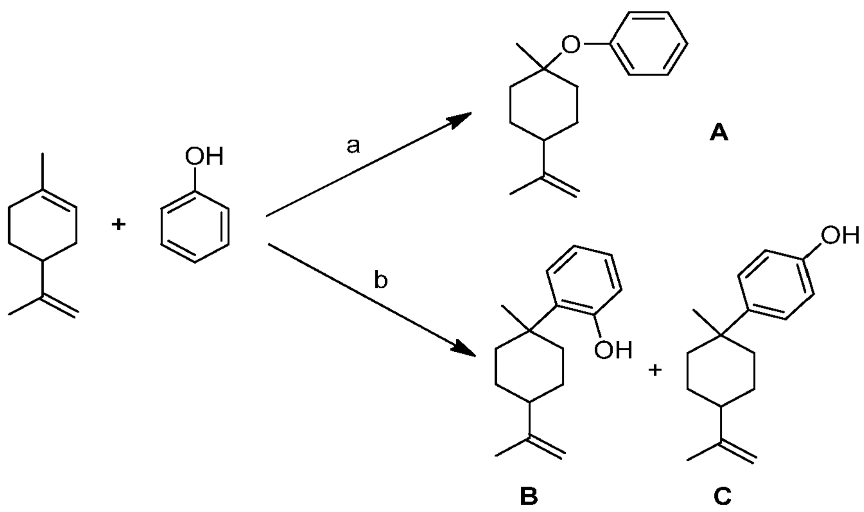


Compound A is an aromatic ether, while compounds B and C are modified phenolics. In many embodiments reaction path b favors formation of product C over B. Only reaction path b results in residual hydroxyl functionality. The degree of selectivity of reaction path a over reaction path b, and thus the degree of hydroxyl functionality of the final product, is one factor that determines the utility of the terpene phenolic tackifiers that are useful in the adhesive compositions herein. It is important to note that a mixture of A, B, and C type products in a tackifier is acceptable: it is the total hydroxyl content of the tackifier, measured and expressed as the hydroxyl number, that is important for the tackifiers useful in the adhesive compositions herein. Measurement of hydroxyl number is discussed below.

In the reaction scheme pictured above, it is important to note that in some embodiments the reaction does not yield only the 1:1 addition reaction products as pictured. In some embodiments, two or more terpenes react with one phenolic compound. In other embodiments, two or more phenolic compounds react with one terpene. In embodiments where the phenolic compound has more than one site available for reaction with a terpene compound (in the case of phenol

itself, there are 3 potential reactive sites), or where the terpene has more than one site available for reaction with a phenolic compound, X:Y phenolic compound : terpene compound reaction products can arise. For example, in embodiments 3:1, 2:1, 1:2, 1:3, or other reaction product ratios arise. This is particularly true where oligomeric phenolic compounds having multiple aromatic hydroxyls are employed as the phenolic compound starting material. In such embodiments, the relative amounts of 1:1, 1:2, or other reaction products present in a reaction mixture, or in a blend formed after the reaction, may be expressed as an average phenolic:terpene reaction product ratio such as e.g. 1:1.5,1.7:1, 1:1.02, and the like. For the purposes of the terpene phenolic tackifiers useful in the adhesive compositions herein, such ratios are not particularly limited. In some embodiments, the average phenolic:terpene reaction product ratio is between about 2:1 and 1:2, or between about 1.5:1 and 1:1.5.

In some embodiments, terpene phenolics useful in the adhesive compositions have average molecular weights of about 200 g/mol to 3000 g/mol, or about 250 g/mol to 1500 g/mol, or about 300 g/mol to 1000 g/mol, or about 300 g/mol to 800 g/mol, or about 400 g/mol to 800 g/mol, or about 500 g/mol to 700 g/mol. In some embodiments, terpene phenolics useful in the adhesive compositions have a polydispersity of about 1 to 3, or about 1 to 2, or about 1 to 1.5. In some embodiments, terpene phenolics useful in the adhesive compositions herein can have glass transition temperatures of about 40°C to 120°C, or about 50°C to 100°C. In some embodiments, terpene phenolics useful in the adhesive compositions herein have softening points of about 80°C to 170°C, or about 125°C to 170°C, or about 125°C to 140°C.

In various embodiments, terpene phenolic tackifiers that are useful in the adhesive compositions herein include those with an acid number that is very low. By way of example, in some embodiments terpene phenolic tackifiers used herein can have an acid number of less than about 0.5. In some embodiments terpene phenolic tackifiers used herein can have an acid number of less than about 0.25. In some embodiments terpene phenolic tackifiers used herein can have an acid number of less than about 0.1. In some embodiments terpene phenolic tackifiers used herein can have an acid number of about 0. Acid number is the number of mg of potassium hydroxide (KOH) required to neutralize the acid functionality in a 1 g aliquot of the tackifier compound. Various methods are employed by the skilled practitioner to determine acid number. In one typical procedure, a known amount of the tackifier is dissolved in organic solvent is titrated with a solution of KOH of known concentration, employing phenolphthalein as a color indicator. Other acid number tests include ASTM D 974 and ASTM D664. Included in the definition of "about 0" is an acid number that is very close to 0, such as 0.05, in order to account for minimal amounts of impurities or error in the testing measurements.

In many embodiments, commercially available terpene phenolics are useful in the adhesive compositions herein. Terpene phenolic tackifiers are sold, for example, by the Arizona Chemical Company of Jacksonville, FL, under the trade name SYLVARES®; by MeadWestvaco Corporation of North Charleston, SC under the trade name DERTOPHENE®); and by the Yasuhara Chemical Company, Ltd. of Fuchu City, Japan under the trade name POLYSTER®. Specific tackifiers can include, but are not limited to, SYLVARES® TP 115, SYLVARES® TP 96, SYLVARES® TP 2019, POLYSTER® T130, POLYSTER® T100, POLYSTER® T115, and POLYSTER® T80.

It will be understood that "phenolic tackifier" includes blends of two or more such tackifiers. Blends of two or more phenolic tackifiers are useful in some embodiments of the adhesive compositions herein. In some embodiments, the blends of phenolic tackifiers include blends of tackifiers differing solely in terms of molecular weight, degree of branching, or types of terpenes and/or phenolic compounds employed as starting materials to make the phenolic tackifiers. In other embodiments, the blends of phenolic tackifiers have more than one such difference.

The amount of (e.g. B block compatible) tackifying resin varies from about 10 to about 75 wt. % depending on the type of tackifier, based on the total weight of the organic components of the adhesive composition. In some embodiments, the adhesive composition comprises at least 15, 20, 25, or 30 wt.% of (e.g. B block compatible) tackifying resin. In some embodiments, the adhesive composition comprises no greater than 65, 60, 55, 50 or 45 wt.% of (e.g. B block compatible) tackifying resin.

Plasticizers, such as oils, are commonly included in pressure sensitive adhesive compositions. In some embodiments, the plasticizer (e.g. oil) is compatible with the B blocks. Petroleum-based oils having less than 50% aromatic content are typically preferred. Such oils include both paraffinic and naphthenic oils. The oils should additionally have low volatility, typically having an initial boiling point above about 500°F.

Alternative plasticizers include oligomers of randomly or sequentially polymerized styrene and conjugated diene, oligomers of conjugated diene, such as butadiene or isoprene, liquid polybutene-1, and ethylene-propylene-diene rubber. Such alternative plasticizers are generally low or high viscosity liquids having a number average molecular weight in the range from 300 to 25,000; 30,000; or 35,000 g/mole.

The sum of plasticizer and liquid tackifying resin of the pressure sensitive adhesive is typically less than 20 wt.% based on the total amount of organic components of the adhesive composition (e.g. excluding inorganic filler). In some embodiments, the sum of plasticizer and liquid tackifying resin of the pressure sensitive adhesive composition is no greater than 19, 18, 17, 16, 16, 15, 14, 13, 12, 11, 10, 9, 8, 7, 6, 5, 4, 3, 2, 1 wt.%.

In some embodiments, the adhesive compositions herein include one or more additives such as antioxidants, (e.g. ultraviolet and thermal) stabilizers, colorant, antimicrobial agent, filler, crosslinker, and combinations thereof.

Antioxidants can include various agents including, but not limited to, phenols (including but not limited to hindered

phenolics and bisphenolics), mercaptan group containing compounds (including, but not limited to thioethers, thioesters, and mercapto-benzimidazoles), di-hydroquinolines, hydroquinones, lactates, butylated paracresols, amines, unsaturated acetals, fluorophosphonites, phosphites, and blends of these. It will be appreciated that these groups are not exclusive in some cases. By way of examples, a phenolic compound could also have a mercaptan group.

In some embodiments, the adhesive comprises an amount of antioxidant greater than 0.01 wt. %, 0.05 wt. %, 0.1 wt. %, 0.2 wt. %, 0.3 wt. %, 0.4 wt. %, 0.5 wt. %, 1.0 wt. %, 1.5 wt. %, or greater than 2.0 wt. % based on the total weight of the adhesive. In some embodiments, the amount of the antioxidant used is less than 5 wt. %, 4 wt. %, 3 wt. %, 2.5 wt. %, 2 wt. %, 1.5 wt. %, or 1.0 wt. %, 0.8 wt. %, or 0.5 wt. %. In some embodiments, the amount of the antioxidant can be in a range of about 0.10 wt. % to about 2.0 wt. %.

Pressure sensitive adhesives generally have a glass transition temperature (Tg) below room temperature, i.e. less than 25°C. In some embodiments, the (e.g. pressure sensitive) adhesive described herein has a Tg no greater than 20°C, 15°C, 10°C, or 5°C as determined with the rheology (dynamic mechanical analysis) test method described in the examples with a frequency of 1 Hz. In some embodiments, the Tg is at least -15 or -10°C. In some embodiments, the (e.g. pressure sensitive) adhesive exhibits a single Tg, or in other words a single phase, for the tackified isoprene and butadiene midblocks.

The "Dahlquist Criterion for Tack" is widely recognized as a necessary condition of a pressure sensitive adhesives (PSA). It states that a PSA has a shear storage modulus (G') of less than 3 x $10^6$ dyne/$cm^2$ (0.3 MPa) at approximately room temperature (25°C) and a frequency of 1 Hz (Pocius, Adhesion and Adhesive Technology 3rd Ed., 2012, p. 288). In some embodiments, the adhesive described herein has a shear storage modulus (G') of at least 0.1, 0.2, 0.3, 0.4, or 0.5 MPa at approximately room temperature (25°C) and a frequency of 1 Hz.

In some embodiments, the pressure sensitive adhesive composition described herein exhibits a shear adhesion force to painted drywall (as determined according to the test method described in the examples) of at least 5,000; 10,000 or 25,000+ minutes. The paint may be Interior Acrylic Latex Ben Bone White Paint obtained from Sherwin Williams.

The (e.g. pressure sensitive) adhesive compositions can be prepared by dissolving the A-A/B block copolymer, second block copolymer when present, tackifying resin, and other optional components in an organic solvent. Suitable solvents for mixing and coating the pressure sensitive adhesive compositions herein include aromatic, aliphatic, cycloaliphatic, and aralkyl compounds, as well as ketones, aldehydes, alcohols, or esters that are liquids at least between about 20°C to 85°C and dissolve or disperse the components of the pressure sensitive adhesive composition sufficiently to form a suitably homogeneous coating on the adhesive article at the targeted coating temperature. In some embodiments, heptane, cyclohexane, benzene, toluene, xylene, naphthalene, acetone, methyl ethyl ketone, acetaldehyde, propionaldehyde, ethyl acetate, isopropyl alcohol, butyl alcohol, and the like, and mixtures thereof, are suitable coating solvents.

The (e.g. pressure sensitive) adhesive compositions can contain 1 wt.% to 90 wt.% solids in the solvent or solvent mixture. In some embodiments, the adhesive coating contains at least 10, 20, 30, or 40 wt.% solids in the solvent or solvent mixture. In some embodiments, the adhesive coating contains no greater than 80, 70, or 60 wt.% solids in the solvent or solvent mixture.

In some embodiments, the (e.g. pressure sensitive) adhesive compositions described herein are coated and/or laminated onto a substrate, such as a (e.g. tape) backing or release liner, to form a coated layer disposed on one or more portions of one or more major surfaces thereon. Conventional solvent coating techniques such as knife coating, die coating, bar coating, slot coating, brush coating, dip coating, spray coating, and the like can be utilized. After coating, the solvent is removed to result in an adhesive layer. In some embodiments, heat, forced air, or both are employed to remove the solvent. After drying, in embodiments where the adhesive layer is coated on a liner, the liner can then be laminated to the substrate (e.g. backing). The laminating step includes contacting the adhesive layer to the substrate and may include application of pressure, heat, or both. Alternatively, the (e.g. pressure sensitive) adhesive compositions described herein may be prepared as a solvent-less hot melt adhesive and coated molten.

In some embodiments the surface of the substrate (e.g. backing) is treated by flame treatment, air corona treatment, nitrogen corona treatment, or some other surface treatment to impart better adhesion of the pressure sensitive adhesive layer when coated thereon. In other embodiments, a layer of primer is coated from a liquid composition to form a dried layer less than 1 μm thick on the surface of the substrate (e.g. backing), or in some embodiments 1 to 10 μm thick; the primer is a material that improves adhesion of the pressure sensitive adhesive layer to the substrate (e.g. backing). In still other embodiments, the substrate (e.g. backing) is extrusion coated or coextruded with one or more additional layers of resin to impart interlayer adhesion; such layers are often referred to as "tie layers." Tie layers are layers containing material that has acceptable interlayer adhesion to both the layer onto which it is deposited and the layer that is deposited on top of it; such tie layers provide sufficient interlayer adhesion for the selected application. A tie layer is present, in some embodiments, between coextruded layers of the substrate (e.g. backing); in other embodiments, the tie layer is extruded onto an exposed surface and provides adhesion between the pressure sensitive adhesive and the substrate (e.g. backing).

The (e.g. pressure sensitive) adhesive layer has thickness ranging from 1 μm to 1 mm thick, or about 10 μm to 500 μm thick, or about 25 μm to 300 μm thick, or about 25 μm to 200 μm thick, or about 25 μm to 100 μm thick. In some

embodiments, the layer of pressure sensitive adhesive composition is substantially continuous. In other embodiments, the layer of pressure sensitive adhesive composition is discontinuous. In some such embodiments, the layer is present as e.g., dots or stripes. The discontinuous coating may form a pattern.

In some embodiments, adhesive articles are described that include a substrate (e.g. backing, release liner) and a layer of pressure sensitive adhesive described herein, disposed on the substrate. The adhesive is coated on at least a portion of one major surface of the substrate (e.g. backing). In some embodiments, one major surface of the substrate (e.g. backing) is coated with the adhesive composition. In other embodiments, portions of both major surfaces of the substrate (e.g. backing) are coated with an adhesive composition.

The substrate (e.g. backing) is typically a substantially planar film or layer having two major opposing surfaces. The thickness of the substantially planar film or layer is orthogonal to the major opposing surfaces. The (e.g. major surface of the) substrate (e.g. backing) can be any desired shape including, for example, square, rectangle, triangular, polygon, circular, quadrilateral, trapezoidal, cylindrical, half-circular, star-shaped, half-moon shaped, tetrahedral, etc.

The thickness of the substrate (e.g. backing) is not particularly limited. In some embodiments, the thickness of the substrate (e.g. backing) is at least 1, 5, 10, 25, or 50 $\mu$m. In some embodiments, the thickness of the substrate (e.g. backing) is no greater than 10, 5, 2.5, or 1 mm. In some embodiments, the substrate (e.g. backing) has a thickness of greater than 5 mils, greater than 8 mils, greater than 10 mils, greater than 12 mils, greater than 15 mils, greater than 20 mils, greater than 22 mils, or greater than 24 mils. In some embodiments, the backing has a thickness of less than 100 mils, less than 90 mils, less than 80 mils, less than 75 mils, less than 70 mils, less than 65 mils, less than 60 mils, less than 55 mils, less than 50 mils, less than 45 mils, less than 40 mils, less than 38 mils, less than 35 mils, less than 32 mils, less than 30 mils, less than 28 mils, or less than 25 mils.

The substrate (e.g. backing) can be a single layer or a multilayer construction. More than one backing layer can be present in the backing. Multiple backing layers can be separated by layers of film, which may further contain one or more layers. In some embodiments, the backing includes at least one of plastic, metal, paper, nonwoven material, textile, woven material, foam, adhesive, gel, and/or a filament reinforced material. In some embodiments, the backing is at least one of a single layer of material or a multilayer film. In other embodiments, the backing can be an arrangement of particles disposed between adjacent adhesive layers.

In some embodiments, two or more sub-layers can be co-extruded so as to form the backing. In some embodiments, the backing is flexible. Some embodiments include dyes or pigments in the backing layer. Some embodiments include at least one tackifier in at least one layer of the backing. Some embodiments include a plasticizing oil in one or more layers of the backing.

The substrate (e.g. backing) can be made of any desired material or materials. Representative examples of materials suitable for the substrate (e.g. backing) can include, for example, polyolefins, such as polyethylene, including high density polyethylene, low density polyethylene, linear low density polyethylene, and linear ultralow density polyethylene, polypropylene, polybutylenes; vinyl copolymers, such as polyvinyl chlorides, both plasticized and unplasticized, and polyvinyl acetates; olefinic copolymers, such as ethylene/methacrylate copolymers, ethylene/vinyl acetate copolymers, acrylonitrile-butadiene styrene copolymers, and ethylene/propylene copolymers; acrylic polymers and copolymers; polyurethanes; polyamides; polyesters; polycarbonates; as well as mixtures and copolymers thereof. Suitable mixtures include for example polypropylene/polyethylene, polyurethane/polyolefin, polyurethane/polycarbonate, and polyurethane/polyester.

In some embodiments, a natural material such as paper or composite mixtures of paper and one or more thermoplastic materials are employed as the substrate (e.g. backing).

In some embodiments, the substrate (e.g. backing) is or includes a composite foam that includes a flexible polymeric foam layer, a first film laminated to a first major surface of the foam layer, and a second film laminated to a second, opposite major surface of the foam layer. Adhesive(s) can be attached to the films to form a structure of adhesive-film-foam-film-adhesive. The flexible polymeric foam layer can be chosen to optimize conformability and resiliency properties which are helpful when an adhesive article is to be adhered to surfaces having surface irregularities. Such is the case with a typical wall surface. An exemplary flexible polymeric foam layer is commercially available under the trade designation "Command" from 3M Company of St. Paul, Minn. In some embodiments, the flexible polymeric foam layer of the backing can include polyolefin foams which are available under the trade designations "Volextra" and "Volara" from Voltek, Division of Sekisui America Corporation, Lawrence, Mass. In some embodiments, the backing is or includes a metal or is metal-like. In some embodiments, the backing is or includes wood or is wood-like.

The substrate (e.g. backing) can be or include one of the materials or backings described in any of the following patent applications: US Provisional Application Nos. (assigned to the present applicant) 62/ 622,387, 62/526,200, and 62/477,844; PCT Application No. US2017/016039 (Runge et al.); and WO Publication No. 2015/195344, all assigned to the present assignee.

In some embodiments, the substrate (e.g. backing) material has a storage modulus of between about $15 \times 10^3$ Pa and about $2.5 \times 10^6$ Pa at 25 degrees Celsius. In other embodiments including those with glass materials or other ceramics, the backing material can have a storage modulus of up $1 \times 10^{10}$ Pa. In some embodiments, the backing material has a tan $\delta$

(where tan $\delta$ is the loss modulus divided by the storage modulus) of between about 0.4 and about 1.2 at 25 degrees Celsius. In some embodiments, the backing has a glass transition temperature of between about - 125 and about 40 degrees Celsius. In other embodiments, the backing material has a stress relaxation between 10% and 100% after 10 seconds.

In some embodiments, the substrate (e.g. backing) exhibits an elastic recovery of 1-99% at 10% strain. In some embodiments, the backing exhibits an elastic recovery of 1-99% at 20% strain. In some embodiment of the disclosure, the backing material has an elongation at break of greater than 50% in at least one direction. In some embodiment of the disclosure, the backing material has an elongation at break of between about 50% and about 1200% in at least one direction.

In some embodiments, the substrate (e.g. backing) has a Young's modulus of between about 100 psi and about 100,000 psi. In other embodiments featuring glass materials or ceramics, the backing may have a Young's modulus of up to 10,000,000 psi. In some embodiments, the backing exhibits an elastic recovery of 1-100% at 10% strain as measured by ASTM D5459-95. In some embodiments, the backing exhibits an elastic recovery of 1-100% at 20% strain.

In some embodiments, the substrate (e.g. backing) has a modulus of elasticity and/or a modulus of secant of between about 100 psi and about 15,000 psi as determined by at least one of ASTM D638-14 and ASTM D412-06a. In some embodiments, the backing has a modulus ranging between 100 psi and 15000 psi. In some embodiments the modulus is greater than 100 psi, greater than 500 psi, greater than 1000 psi. In some embodiments the backing modulus is less than 15000 psi, less than 10000 psi, less than 8,000 psi, less than 5,000 psi, less than 3,500 psi, less than 2000 psi, and less than 1500 psi.

In some embodiments, the adhesive articles include at least one release liner disposed on the exposed surface of a layer of pressure sensitive adhesive composition to protect the adhesive composition until use. Liners are substantially planar films or layers having two opposing major sides defining a thickness, wherein at least one major side thereof contacts an adhesive layer of the adhesive article prior to use, and wherein the liner is removable by the user; and wherein upon removal, the liner includes substantially no adhesive. Examples of suitable liners include, e.g., paper such as kraft paper, polymer films such as polyethylene, polypropylene and polyester films, and combinations thereof. In embodiments, the liner is a release liner. In embodiments, a release liner is a liner wherein at least one major side thereof includes a release agent layer resulting from a release treatment to form a release liner. Examples of useful release agents include silicone (polydimethyl siloxane) or silicone copolymers such as silicone acrylates, silicone polyurethanes and silicone polyureas; fluorochemicals such as fluorosilicones or perfluoropolyethers; or other relatively low surface-energy compositions based on urethanes, acrylates, polyolefins, low density polyethylene, and the like, and combinations thereof. Suitable release liners and methods for treating liners are described in, e.g., U.S. Patent Nos. 4,472,480; 4,980,443; and 4,736,048.

In some embodiments, the adhesive article includes one or more non-adhesive areas, as described in WO 2018/039584.

The (e.g. pressure sensitive) adhesive and adhesive article (e.g. tape) described herein can be used in various methods of bonding. In one embodiment, a method of bonding is described comprising providing a (e.g. pressure sensitive) adhesive composition as described herein, applying the adhesive composition to a substrate; and contacting the adhesive to a surface. In another embodiment, the method of bonding is described comprising providing an adhesive article comprising a substrate and a layer of (e.g. pressure sensitive) adhesive disposed on the substrate; and contacting the layer of adhesive to a surface. In some embodiments, the adhesive described herein may be used to adhere a mounting device such as a hook, clip, magnet, detachable mechanical fastener, snap, loop, or detachable mechanical fastener to a (e.g. painted) surface.

## EXAMPLES

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. Table 1 (below) lists materials used in the examples and their sources.

TABLE 1. Materials List

| DESIGNATION | DESCRIPTION | SOURCE |
|---|---|---|
| K1119 | SIS linear block copolymer, melt index of 25 g/10 min (200°C/5 kg), styrene 22%, 66% diblock, obtained under the trade designation KRATON 1119 | Kraton Corporation, Houston, TX, USA |
| K1124 | (SI)n radial block copolymer, melt index of 25 g/10 min (200°C/5 kg), styrene 30%, 30% diblock, obtained under the trade designation KRATON 1124 | Kraton Corporation |

(continued)

| DESIGNATION | DESCRIPTION | SOURCE |
|---|---|---|
| K1126 | (SI)n radial block copolymer, melt index of 15 g/10 min (200°C/5 kg), styrene 15%, 19% diblock, obtained under the trade designation KRATON 1126 | Kraton Corporation |
| K1161 | SIS linear block copolymer, melt index of 12 g/10 min (200°C/5 kg), styrene 22%, 66% diblock, obtained under the trade designation KRATON 1161 | Kraton Corporation |
| K1164 | SIS linear block copolymer, melt index of 12 g/10 min (200°C/5 kg), styrene 29%, <1% diblock, obtained under the trade designation KRATON 1164 | Kraton Corporation |
| K1165 | SIS linear block copolymer, melt index of 7 g/10 min (200°C/5 kg), styrene 30%, 20% diblock, obtained under the trade designation KRATON 1165 | Kraton Corporation |
| KD1340 | An asymmetric multi-arm star, styrene-isoprene block copolymer having 9% styrene and a Mn > 1,000 kg/mol, as described in US 5,296,547; obtained under the trade designation KRATON D1340 | Kraton Corporation |
| S1322 | High molecular weight linear random-block copolymer having 30% styrene, 22% present as a polystyrene block obtained under the trade designation SOLPRENE 1322 | Dynasol (Houston, TX, USA) |
| S1205 | Linear random-block copolymer having 25% styrene, 17.5% present as a polystyrene block having a toluene viscosity at 30% solid of 4000 cps obtained under the trade designation SOLPRENE 1205 | Dynasol |
| S1433 | Linear random-block copolymer having 45% styrene, 33% present as a polystyrene block obtained under the trade designation SOLPRENE 1433 | Dynasol |
| S1110 | High molecular weight linear random-block copolymer having 15% styrene, 10% present as a polystyrene block obtained under the trade designation SOLPRENE 1110 | Dynasol |
| S115 | Polyterpene tackifying resin obtained under the product number Piccolyte™ S115 | Pinova, Brunswick, GA, USA |
| T100 | Terpene phenol tackifier, softening point 100°C obtained under the product number YS POLYESTER T100, having a hydroxyl number of 55-70 mg KOH | Yasuhara Chemical Co., Ltd. |
| T130 | Terpene phenol tackifier, softening point 130°C obtained under the product number YS POLYESTER T130, having a hydroxyl number of 55-70 mg KOH | Yasuhara Chemical Co., Ltd. |
| T80 | Terpene phenol tackifier, softening point 80°C obtained under the product number YS POLYESTER T180, having a hydroxyl number of 55-70 mg KOH | Yasuhara Chemical Co., Ltd. |
| T145 | Terpene phenol tackifier, softening point 145°C obtained under the product number YS POLYESTER T145, having a hydroxyl number of 55-70 mg KOH | Yasuhara Chemical Co., Ltd. |
| E1310 | Aliphatic hydrocarbon tackifying resin, softening point 94°C, obtained under the trade designation Escorez™ 1310 | Exon Mobile, Parkway Spring, TX, USA |
| W10 | Liquid C5 tackifying resin obtained under the trade designation WINGTACK 10 | Cray Valley, Paris, France |
| ZK100 | C5 tackifying resin, 101°C softening point obtained under the trade designation Quintone K100 | Zeon, Tokyo, JP |
| E5615 | Hydrogenated aromatic modified cycloaliphatic hydrocarbon resin, softening point 118°C, obtained under the trade designation Escorez™ 5615 | Exxon Mobile |
| E5340 | Hydrogenated cycloaliphatic hydrocarbon resin, softening point 140°C, obtained under the trade designation Escorez™ 5340 | Exxon Mobile |
| I1520 | Antioxidant (AO) obtained under the trade designation IRGANOX 1520 | BASF, Ludwigshafen, Germany |

(continued)

| DESIGNATION | DESCRIPTION | SOURCE |
|---|---|---|
| I1010 | Antioxidant (AO) obtained under the trade designation IRGANOX 1010 | BASF |

*Test Methods*

RHEOLOGICAL ANALYSIS

Rheological data was gathered using a DHR2 rheometer (TA Instruments, Eden Prairie, MN, USA) using 8 millimeter (mm) parallel plates in oscillatory shear. A constant oscillation frequency of 1 Hertz (Hz) was used while scanning temperatures from 25 °C to either -65 °C or when the sample storage modulus exceeded 3 x $10^8$ pascals (Pa) at which time the sample was returned to 30 °C and temperature was ramped to 100 °C. Rheological samples were prepared by layering adhesive transfer tape to achieve a thickness of 1-2 millimeter (mm) and cut using a punch for rheological analysis.

GEL PERMEATION CHROMOTOGRAPHY (GPC) TEST METHOD

Samples were prepared in tetrahydrofuran (THF, stabilized with 250 ppm BHT) by weighing sample and solvent; the target concentration was approximately 3 milligrams/milliliter. The sample solution was then filtered through a 0.45 micrometer PTFE syringe filter and analyzed by GPC under the following conditions:

| | |
|---|---|
| Instrument: | Agilent 1260 LC |
| Column set: | Waters Styragel HR 5E, 300 x 7.8 mm I.D. |
| Col. Heater: | 40 °C |
| Mobile phase: | THF (stabilized with 250 ppm BHT) at 1.0 mL/min |
| Injection volume: | 30 microliters |
| Detector (s): | Wyatt DAWN HELEOS-II 18 angle Light Scattering detector<br>Wyatt Optilab T-rEX Differential Refractive Index (DRI) detector |

Molecular weight results from GPC were determined using light scattering detection in THF eluent and ASTRA 6 from Wyatt Technology Corporation was used for data collection and analysis. The differential refractive index increment (dn/dc) of each sample was experimentally determined in the mobile phase or eluent using a Total Recovery Approach. Results are averages from duplicate injections and all dn/dc values are in mL/g. The experimental dn/dc values were used for molecular weight calculations.

$$M_n = \text{Number-average molecular weight}$$

$$M_w = \text{Weight-average molecular weight}$$

$$Đ = \text{Dispersity} = M_w/M_n$$

**Preparation of Painted Drywall**

Drywall panels (obtained from Materials Company, Metzger Building, St. Paul, MN) were painted with Interior Acrylic Latex Ben Bone White Paint obtained from Sherwin Williams.

Procedure for painting drywall with paints: a first coat of paint was applied to a drywall panel by paint roller, followed by air drying for 24 hours at ambient conditions. A second coat of paint was applied dried at ambient conditions for 24 hours. The panel was allowed to dry at room temperature for 7 days. Then the panel was stored at ambient conditions until use.

**Preparation of Stretch-Release Strip**

The adhesive compositions of the following tables were compounded at 50% solids in HPLC grade toluene in

glass jars and allowed to roll until thoroughly mixed. Samples were coated with a flatbed knife onto silicone release liner using a flatbed knife coater connected to a drying over with a 30 foot drying path at a line speed of 9 feet per minute with an average oven temperature profile of 160 °F to give a nominal coat weight of 17 grains per 24 square inches (2.8 mil thickness). The adhesive side of the coated release liner was laminated to both major surface of a primed composite film-foam-film (31 mil 6 lb. foam with 1.8 mil polyethylene film on both sides of the foam) backing using an automated roller at a nominal pressure of 20 pounds per square inch (PSI) on speed setting 3 feet/minute (0.91 meters/minute). Samples were die cut into ½ inch x ½ inch (1.27 centimeter (cm) x 1.27 cm) squares used for shear testing. Samples were conditioned at 50% relative humidity and 23°C for at least 24 hours prior to testing.

**Shear Adhesion Testing of Stretch-Release Strip**

The adhesive coated surface of the Stretch-Release-Strip was adhered to the painted drywall. A 6.8 kg roller was passed over the test adhesive at 12 inches/minute (30.5 cm/minute). The samples were mounted in a vertical position and allowed to dwell for 60 min at 72°F (22°C) 50% relative humidity before attaching a 1 kg load to the adhesive. Samples were hung until failure or until 25,000 minutes had elapsed. An average of 3 samples was reported.

TABLE 2A. Comparative Adhesive Compositions

| EXAMPLE | Host Elastomer, wt% | | | | | | Taper SB Diblock, wt% | Tackifiers/ Plasticizers, wt% | AO, wt% |
|---|---|---|---|---|---|---|---|---|---|
| | K1165 | K1124 | K1164 | K1126 | K1161 | K1119 | S1205 | ZK100 | 11520 |
| CEX-1 | 55.25 | 0 | 0 | 0 | 0 | 0 | 0 | 44.20 | 0.55 |
| CEX-2 | 0 | 55.25 | 0 | 0 | 0 | 0 | 0 | 44.20 | 0.55 |
| CEX-3 | 0 | 0 | 55.25 | 0 | 0 | 0 | 0 | 44.20 | 0.55 |
| CEX-4 | 0 | 0 | 0 | 55.25 | 0 | 0 | 0 | 44.20 | 0.55 |
| CEX-5 | 0 | 0 | 0 | 0 | 55.25 | 0 | 0 | 44.20 | 0.55 |
| CEX-6 | 0 | 0 | 0 | 0 | 0 | 55.25 | 0 | 44.20 | 0.55 |

TABLE 2B. Shear Strength of Comparative Adhesive Compositions

| EXAMPLE | Average Time to Failure Shear Strength on Ben Bone Drywall at 50% relative humidity and 23°C, minutes |
|---|---|
| CEX-1 | 4315 +/- 4439 |
| CEX-2 | 3832 +/- 1612 |
| CEX-3 | 183 +/- 113 |
| CEX-4 | 1954 +/- 682 |
| CEX-5 | 16024 +/- 9192 |
| CEX-6 | 7703 +/- 6513 |

TABLE 3. Adhesive Compositions

| EXAMPLE | Host Elastomer, wt% | Taper SB Diblock, wt% | | Tackifying Resin, wt% | | | AO, wt% |
|---|---|---|---|---|---|---|---|
| | K1164 | S1205 | S1322 | ZK100 | T115 | T130 | I1520 |
| EX-7 | 41.44 | 13.81 | 0 | 44.20 | 0 | 0 | 0.55 |
| EX-8 | 41.44 | 13.81 | 0 | 0.00 | 44.20 | 0.00 | 0.55 |
| EX-9 | 41.44 | 0 | 13.81 | 0.00 | 44.20 | 0.00 | 0.55 |
| EX-10 | 41.44 | 13.81 | 0.00 | 0.00 | 0.00 | 44.20 | 0.55 |
| EX-11 | 41.44 | 0 | 13.81 | 0.00 | 0.00 | 44.20 | 0.55 |
| EX-12 | 27.62 | 0 | 27.62 | 0.00 | 44.20 | 0.00 | 0.55 |

(continued)

| EXAMPLE | Host Elastomer, wt% | Taper SB Diblock, wt% | | Tackifying Resin, wt% | | | AO, wt% |
|---|---|---|---|---|---|---|---|
| | K1164 | S1205 | S1322 | ZK100 | T115 | T130 | I1520 |
| EX-13 | 33.58 | 0 | 16.17 | 0.00 | 49.75 | 0.00 | 0.50 |
| EX-14 | 33.58 | 0 | 16.17 | 0.00 | 0.00 | 49.75 | 0.50 |

TABLE 3B. Shear Strength

| EXAMPLE | Average Time to Failure Shear Strength on Ben Bone Drywall at 50% relative humidity and 23°C, minutes |
|---|---|
| EX-7 | >25,000 |
| EX-8 | >25,000 |
| EX-9 | >25,000 |
| EX-10 | >25,000 |
| EX-11 | >25,000 |
| EX-12 | >25,000 |
| EX-13 | >25,000 |
| EX-14 | >25,000 |

TABLE 4A. Adhesive Compositions

| EXAMPLE | Host Elastomer, wt% | Taper SB Diblock, wt% | | Tackifying Resin, wt% | |
|---|---|---|---|---|---|
| | K1164 | S1205 | S1322 | T80 | T100 |
| EX-15 | 33.58 | 0 | 16.17 | 49.75 | 0 |
| EX-16 | 33.58 | 0 | 16.17 | 0 | 49.75 |
| EX-15 - EX-17 also contained 0.50 wt.% of I1520 antioxidant | | | | | |

TABLE 4B. Shear Strength

| EXAMPLE | Average Time to Failure Shear Strength on Ben Bone Drywall at 50% relative humidity and 23°C, minutes |
|---|---|
| EX-15 | >25,000 |
| EX-16 | >25,000 |

TABLE 5A. Adhesive Compositions

| EXAMPLE | Host Elastomer, wt% | Taper SB Diblock, wt% | | Tackifying Resin, wt% | |
|---|---|---|---|---|---|
| | K1164 | S1110 | S1433 | T130 | T143 |
| EX-17 | 41.44 | 13.81 | | 44.20 | |
| EX-18 | 41.44 | | 13.81 | | 44.20 |
| EX-17 - EX-18 also contained 0.55 wt.% of I1520 antioxidant | | | | | |

TABLE 5B. Shear Strength

| EXAMPLE | Average Time to Failure Shear Strength on Ben Bone Drywall at 50% relative humidity and 23°C, minutes |
|---|---|
| EX-17 | >25,000 |

(continued)

| EXAMPLE | Average Time to Failure Shear Strength on Ben Bone Drywall at 50% relative humidity and 23°C, minutes |
|---|---|
| EX-18 | >25,000 |

TABLE 6A. Adhesive Formulations

| EXAMPLE | Host Elastomer, wt% | | Taper SB Diblock, wt% | Tackifiers/Plasticizers, wt% | | | AO, wt% | |
|---|---|---|---|---|---|---|---|---|
| | K1164 | K1161 | S1205 | E1310 | W10 | T115 | I1520 | I1010 |
| CEX-19 | 0 | 18.60 | 23.40 | 14.60 | 42.00 | 0 | 0 | 1.40 |
| CEX-20 | 0 | 14.89 | 18.64 | 31.56 | 33.53 | 0 | 0 | 1.38 |
| CEX-21 | 0 | 24.87 | 20.02 | 21.54 | 32.32 | 0 | 0 | 1.26 |
| EX-22 | 41.35 | 0 | 13.78 | 0 | 0 | 44.10 | 0.77 | 0 |
| EX-23 | 41.35 | 0 | 13.78 | 0 | 10.00 | 34.10 | 0.77 | 0 |
| EX-24 | 41.35 | 0 | 13.78 | 0 | 15.00 | 29.10 | 0.77 | 0 |
| CEX-25 | 41.35 | 0 | 13.78 | 0 | 20.00 | 24.10 | 0.77 | 0 |

TABLE 6B. Shear Strenght

| EXAMPLE | Average Time to Failure Shear Strength on Ben Bone Drywall at 50% relative humidity and 23°C, minutes |
|---|---|
| CEX-19 | 12 +/- 1 |
| CEX-20 | 152 +/- 17 |
| CEX-21 | 62 +/- 22 |
| EX-22 | >25,000 +/- 0 |
| EX-23 | >25,000 +/- 0 |
| EX-24 | >25,000 +/- 0 |
| CEX-25 | 1919 +/- 704 |

EXAMPLE 26 (EX-26):

The composition of EX-26 was as follows:

| EXAMPLE | D1119 | D1340 | SOLPRENE 1205 | E5340 | Toluene |
|---|---|---|---|---|---|
| EX-26 | 50 parts (17.54 wt.%) | 50 parts (17.54 wt.%) | 50 parts (17.54 wt.%) | 135 parts (47.36 wt.%) | 250 |

The toluene was evaporated from the adhesive composition prior to conducting rheological analysis.

TABLE 7. Rheological Properties

| Rheological analysis was conducted on EX-9 and EX-26. The Tg and G' is reported in the following table. The plots of EX-9 and EX-26 are depicted in FIG. 1 | | |
|---|---|---|
| EXAMPLE | Tg | G' at 25 °C and 1 Hz |
| | °C | MPa |
| EX-9 | 2.6 | 0.27 |
| EX-26 | -4.2 | 0.13 |

## Claims

1. A pressure sensitive adhesive composition comprising

   a first block copolymer comprising polyvinyl aromatic end block and poly(vinyl aromatic/butadiene) copolymer block;
   at least 20 wt.% of a second polystyrene-polyisoprene-polystyrene block copolymer; and solid tackifying resin; wherein the total amount of block copolymer ranges from 40-65 wt.% and plasticizing oil and liquid tackifying resin are present in a total amount of less than 20 wt.-% based on the total weight of organic components of the pressure sensitive adhesive composition.

2. The pressure sensitive adhesive composition of claim 1 wherein the first block copolymer comprising the polyvinyl aromatic end block and poly(vinyl aromatic/butadiene) block comprises 10 to 40 wt.% styrene, based on the total weight of the block copolymer.

3. The pressure sensitive adhesive composition of claim 2 wherein the poly(vinyl aromatic/butadiene) block comprises 10 to 30 wt.% of the total styrene.

4. The pressure sensitive adhesive composition of claims 2-3 wherein the first block copolymer comprising the polyvinyl aromatic end block and poly(vinyl aromatic/butadiene) block has a Mn ranging from 25,000 to 200,000 g/mole.

5. The pressure sensitive adhesive composition of claims 1-4 wherein the first block copolymer comprising the polyvinyl aromatic end block and poly(vinyl aromatic/butadiene) block is present in an amount ranging from 5 to 25 wt.% based on the total organic components of the adhesive composition.

6. The pressure sensitive adhesive composition of claims 1-5 wherein the second polystyrene-polyisoprene-polystyrene block copolymer is present in an amount equal to or greater than the amount of the first block copolymer.

7. The pressure sensitive adhesive composition of claims 1-6 wherein the polystyrene-polyisoprene-polystyrene block copolymer is a linear SIS block copolymer, (SI)n multi-arm block copolymer, or a mixture thereof.

8. The pressure sensitive adhesive composition of claims 1-7 wherein the adhesive further comprises polystyrene-polyisoprene diblock.

9. The pressure sensitive adhesive composition of claims 1-8 wherein the tackifying resin has a hydroxy number less than 0.1.

10. The pressure sensitive adhesive composition of claim 9 wherein the tackifying rein has a softening point of at least 100°C.

11. The pressure sensitive adhesive composition of claims 1-10 wherein the tackifying resin is a terpene phenolic tackifying resin optionally having a softening point ranging from 90 to 145°C.

12. The pressure sensitive adhesive composition of claims 1-11 wherein the solid tackifier is present in an amount ranging from 25 to 65 wt.% based on the total organic components of the adhesive.

13. The pressure sensitive adhesive composition of claims 1-12 wherein the pressure sensitive adhesive exhibits a single glass transition temperature (Tg) for isoprene and butadiene when measured using dynamic mechanical analysis at a frequency of 1 hertz.

14. The pressure sensitive adhesive composition of claims 1-13 wherein the pressure sensitive adhesive exhibits a shear adhesion to painted drywall greater than 5,000 minutes according to ASTM D3654 (2011) using a bonded area of 2.54 cm by 1.27 cm.

15. An adhesive article comprising:
    a substrate having two major surfaces; wherein at least one major surface comprises a layer of pressure sensitive adhesive composition according to claims 1-14.

## Patentansprüche

1. Eine Haftklebstoffzusammensetzung, umfassend

   ein erstes Blockcopolymer, umfassend einen polyvinylaromatischen Endblock und einen poly(vinylaromatischen/Butadien-) Copolymerblock;
   zu mindestens 20 Gew.-% ein zweites Polystyrol-Polyisopren-Polystyrol-Blockcopolymer; und festes klebrigmachendes Harz;
   wobei die Gesamtmenge an Blockcopolymer in dem Bereich von 40-65 Gew.-% liegt und Weichmacheröl und flüssiges klebrigmachendes Harz in einer Gesamtmenge von weniger als 20 Gew.-%, bezogen auf das Gesamtgewicht der organischen Komponenten der Haftklebstoffzusammensetzung, vorhanden sind.

2. Die Haftklebstoffzusammensetzung nach Anspruch 1, wobei das erste Blockcopolymer, umfassend den polyvinylaromatischen Endblock und den poly(vinylaromatischen/Butadien-) Block, zu 10 bis 40 Gew.-% Styrol, bezogen auf das Gesamtgewicht des Blockcopolymers, umfasst.

3. Die Haftklebstoffzusammensetzung nach Anspruch 2, wobei der poly(vinylaromatischen/Butadien-) Block zu 10 bis 30 Gew.-% des gesamten Styrols umfasst.

4. Die Haftklebstoffzusammensetzung nach den Ansprüchen 2 bis 3, wobei das erste Blockcopolymer, umfassend den polyvinylaromatischen Endblock und den poly(vinylaromatischen/Butadien-) Block, ein Mn in dem Bereich von 25.000 bis 200.000 g/Mol aufweist.

5. Die Haftklebstoffzusammensetzung nach den Ansprüchen 1 bis 4, wobei das erste Blockcopolymer, umfassend den polyvinylaromatischen Endblock und den poly(vinylaromatischen/Butadien-) Block, in einer Menge in dem Bereich von 5 bis 25 Gew.-%, bezogen auf die gesamten organischen Bestandteile der Klebstoffzusammensetzung, vorhanden ist.

6. Die Haftklebstoffzusammensetzung nach den Ansprüchen 1 bis 5, wobei das zweite Polystyrol-Polyisopren-Polystyrol-Blockcopolymer in einer Menge vorhanden ist, die gleich oder größer als die Menge des ersten Blockcopolymers ist.

7. Die Haftklebstoffzusammensetzung nach den Ansprüchen 1 bis 6, wobei das Polystyrol-Polyisopren-Polystyrol-Blockcopolymer ein lineares SIS-Blockcopolymer, ein (SI)n-Mehrarm-Blockcopolymer oder eine Mischung davon ist.

8. Die Haftklebstoffzusammensetzung nach den Ansprüchen 1 bis 7, wobei die Zusammensetzung ferner einen Polystyrol-Polyisopren-Diblock umfasst.

9. Die Haftklebstoffzusammensetzung nach den Ansprüchen 1 bis 8, wobei das klebrigmachende Harz eine Hydroxylzahl von weniger als 0,1 aufweist.

10. Die Haftklebstoffzusammensetzung nach Anspruch 9, wobei das klebrigmachende Harz einen Erweichungspunkt von mindestens 100 °C aufweist.

11. Die Haftklebstoffzusammensetzung nach den Ansprüchen 1 bis 10, wobei das klebrigmachende Harz ein klebrigmachendes Terpenphenolharz ist, das optional einen Erweichungspunkt in dem Bereich von 90 bis 145 °C aufweist.

12. Die Haftklebstoffzusammensetzung nach den Ansprüchen 1 bis 11, wobei der feste Klebrigmacher in einer Menge in dem Bereich von 25 bis 65 Gew.-%, bezogen auf die gesamten organischen Bestandteile des Klebstoffs, vorhanden ist.

13. Die Haftklebstoffzusammensetzung nach den Ansprüchen 1 bis 12, wobei der Haftklebstoff eine einzige Glasübergangstemperatur (Tg) für Isopren und Butadien aufweist, wenn diese mittels dynamischer mechanischer Analyse bei einer Frequenz von 1 Hertz gemessen wird.

14. Die Haftklebstoffzusammensetzung nach den Ansprüchen 1 bis 13, wobei der Haftklebstoff eine Scherhaftung auf gestrichenen Trockenbauwänden von über 5.000 Minuten gemäß ASTM D3654 (2011) unter Verwendung einer

verklebten Fläche von 2,54 cm x 1,27 cm aufweist.

**15.** Ein Klebeartikel, umfassend:
ein Substrat, das zwei Hauptoberflächen aufweist; wobei mindestens eine Hauptoberfläche eine Schicht einer Haftklebstoffzusammensetzung nach den Ansprüchen 1 bis 14 umfasst.

**Revendications**

**1.** Composition d'adhésif sensible à la pression comprenant

un premier copolymère séquencé comprenant une séquence terminale polyvinylaromatique et une séquence copolymère poly(vinylaromatique/butadiène) ;
au moins 20 % en poids d'un second copolymère séquencé polystyrène-polyisoprène-polystyrène ; et une résine poisseuse solide ;
dans laquelle la quantité totale de copolymère séquencé va de 40 à 65 % en poids et une huile plastifiante et une résine poisseuse liquide sont présentes en une quantité totale inférieure à 20 % en poids en fonction du poids total de composants organiques de la composition d'adhésif sensible à la pression.

**2.** Composition d'adhésif sensible à la pression selon la revendication 1 dans laquelle le premier copolymère séquencé comprenant la séquence terminale polyvinylaromatique et la séquence poly(vinylaromatique/butadiène) comprend 10 à 40 % en poids de styrène, en fonction du poids total du copolymère séquencé.

**3.** Composition d'adhésif sensible à la pression selon la revendication 2 dans laquelle la séquence poly(vinylaromatique/butadiène) comprend 10 à 30 % en poids du styrène total.

**4.** Composition d'adhésif sensible à la pression selon les revendications 2 à 3 dans laquelle le premier copolymère séquencé comprenant la séquence terminale polyvinylaromatique et la séquence poly(vinylaromatique/butadiène) a une Mn allant de 25 000 à 200 000 g/mole.

**5.** Composition d'adhésif sensible à la pression selon les revendications 1 à 4 dans laquelle le premier copolymère séquencé comprenant la séquence terminale polyvinylaromatique et la séquence poly(vinylaromatique/butadiène) est présent en une quantité allant de 5 à 25 % en poids en fonction des composants organiques totaux de la composition adhésive.

**6.** Composition d'adhésif sensible à la pression selon les revendications 1 à 5 dans laquelle le second copolymère séquencé polystyrène-polyisoprène-polystyrène est présent en une quantité égale ou supérieure à la quantité du premier copolymère séquencé.

**7.** Composition d'adhésif sensible à la pression selon les revendications 1 à 6 dans laquelle le copolymère séquencé polystyrène-polyisoprène-polystyrène est un copolymère séquencé SIS linéaire, un copolymère séquencé à bras multiples (SI)n, ou un mélange de ceux-ci.

**8.** Composition d'adhésif sensible à la pression selon les revendications 1 à 7 dans laquelle l'adhésif comprend en outre une séquence double polystyrène-polyisoprène.

**9.** Composition d'adhésif sensible à la pression selon les revendications 1 à 8 dans laquelle la résine poisseuse a un indice d'hydroxyle inférieur à 0,1.

**10.** Composition d'adhésif sensible à la pression selon la revendication 9 dans laquelle la résine poisseuse a un point de ramollissement d'au moins 100 °C.

**11.** Composition d'adhésif sensible à la pression selon les revendications 1 à 10 dans laquelle la résine poisseuse est une résine poisseuse terpène-phénolique ayant facultativement un point de ramollissement allant de 90 à 145 °C.

**12.** Composition d'adhésif sensible à la pression selon les revendications 1 à 11 dans laquelle l'agent poisseux solide est présent en une quantité allant de 25 à 65 % en poids en fonction des composants organiques totaux de l'adhésif.

**13.** Composition d'adhésif sensible à la pression selon les revendications 1 à 12 dans laquelle l'adhésif sensible à la pression présente une unique température de transition vitreuse (Tg) pour l'isoprène et le butadiène lorsqu'on mesure à l'aide d'une analyse mécanique dynamique à une fréquence de 1 hertz.

**14.** Composition d'adhésif sensible à la pression selon les revendications 1 à 13 dans laquelle l'adhésif sensible à la pression présente une adhérence par cisaillement à une cloison sèche peinte supérieure à 5000 minutes selon ASTM D3654 (2011) en utilisant une zone liée de 2,54 cm sur 1,27 cm.

**15.** Article adhésif comprenant :
un substrat ayant deux surfaces principales ; dans lequel au moins une surface principale comprend une couche de composition d'adhésif sensible à la pression selon les revendications 1 à 14.

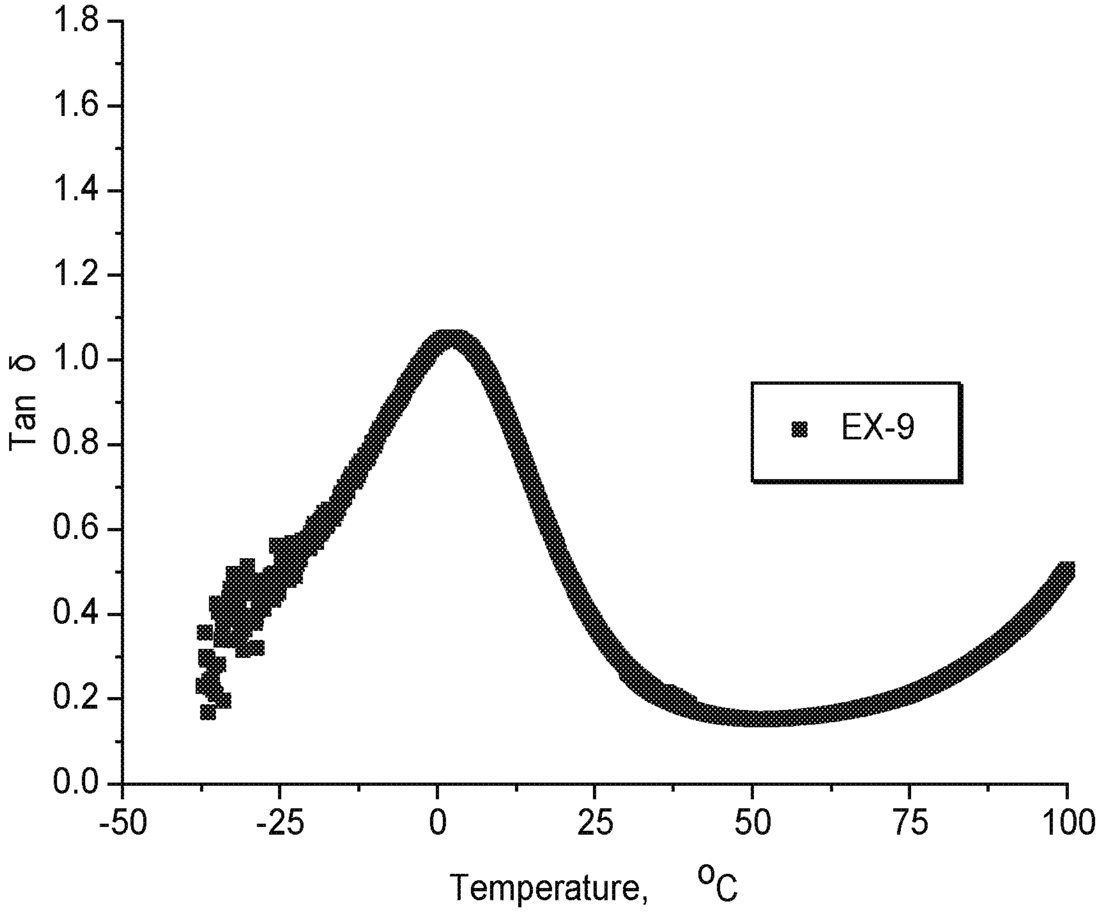
1.8
1.6
1.4
1.2
1.0
0.8
0.6
0.4
0.2
0.0
Tan δ
-50
-25
0
25
50
75
100
Temperature, °C
EX-9

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9113935 A1
- US 5290842 A
- US 3347935 A
- US 3692844 A
- US 3976606 A
- US 5457175 A
- US 6160083 A
- EP 1504074 A
- US 62622387 B
- US 62526200 B
- US 62477844 B
- US 2017016039 W, Runge
- WO 2015195344 A
- US 4472480 A
- US 4980443 A
- US 4736048 A
- WO 2018039584 A
- US 5296547 A

### Non-patent literature cited in the description

- **POCIUS**. Adhesion and Adhesive Technology. 2012, 288